# FASCICULE DE BREVET EUROPEEN

(11) **EP 0 641 602 B1**
(45) Date de publication et mention de la délivrance du brevet: **08.09.1999**
(21) Numéro de dépôt: 94440043.1
(22) Date de dépôt: 22.06.1994
(51) Int. Cl.: B02C 18/22, B29B 17/00, B02C 18/02

(54) **Dispositif de compactage et de cisaillage d'objets volumineux de forte élasticité, notamment de pneumatiques**
Press- und Schneidvorrichtung für voluminöse, stark elastische Gegenstände, insbesondere Reifen
Compacting and shearing device for voluminous highly elastic objects, especially tyres

(30) Priorité: 08.09.1993 FR 9310834
(43) Date de publication de la demande: 08.03.1995
(73) Titulaire: Chazelle, Hubert, 10120 Saint André les Vergers (FR)
(72) Inventeur: Chazelle, Hubert, 10120 Saint André les Vergers (FR)
(74) Mandataire: Thivillier, Patrick

(56) Documents cités:
- EP-A- 0 532 773
- DE-A- 2 158 868
- DE-A- 2 308 244
- DE-A- 3 704 725
- FR-A- 2 267 834
- US-A- 4 174 104

## Description

La présente invention a pour objet un dispositif de compactage et de cisaillage d'objets volumineux de forte élasticité, notamment de pneumatiques.

Les pneus usagés et les pneus neufs défectueux doivent être découpés pour permettre d'en récupérer la matière première, et pour ce faire on a longtemps utilisé des dispositifs destinés à un autre usage, tels que des presses-cisailles à métaux, mis en oeuvre sur les pneus préalablement compactés.

Ces dispositifs présentent des inconvénients, notamment lors du passage de la phase de compactage à la phase de découpe, du fait de la forte élasticité des pneumatiques qui tendent, après le compactage, à reprendre leur forme initiale, ce qui rend la découpe difficile.

On connait d'autre part des dispositifs aptes à réaliser le déchiquetage des pneus, tels que ceux décrits dans les documents DE-A-2 158 868 et DE-A-3 704 725.

Le dispositif objet du document DE-A-2 158 868, destiné au broyage ou au déchiquetage de déchets volumineux tels que des pneus, des fûts de matière plastique ou des pièces de mobilier, met en oeuvre un moyen de compactage ou de prébroyage associé à un moyen de déchiquetage. Le moyen de compactage ou de prébroyage est constitué de deux bandes de convoyage convergentes munies de tenons d'entraînement et de deux ensembles convergents de rouleaux d'entraînement disposés verticalement. Le moyen de déchiquetage est constitué de deux rotors munis à leur périphérie d'une multiplicité de dents.

Si ce dispositif peut réaliser le broyage et le déchiquetage de déchets de matière plastique ou de bois, il ne saurait assurer sans difficulté le déchiquetage des pneus d'automobiles, en raison de la présence dans ces pneus de joncs d'acier d'assez grande épaisseur, positionnés au voisinage du bord interne des pneus : les dents des rotors ne peuvent en effet déchiqueter que la matière caoutchouteuse des pneus, et les joncs d'acier peuvent les endommager et doivent en tout cas être évacués indépendamment des déchets de caoutchouc.

Le dispositif objet du document DE-A-3 704 725, destiné au déchiquetage des pneus usagés, comprend un moyen de compactage constitué de deux ensembles de rouleaux convergents disposés horizontalement, à l'extrémité convergente desquels se trouve disposé un organe de déchiquetage constitué d'un rotor muni en périphérie de dents formées de plaquettes d'un métal dur.

Ce dispositif réalise le déchiquetage des pneus usés, de préférence après que les inserts métalliques aient été enlevés, ce qui constitue un inconvénient, car nécessitant de soumettre les pneus à un premier traitement avant de les introduire dans le dispositif de déchiquetage.

Les dispositifs décrits dans ces deux documents présentent en outre l'inconvénient supplémentaire d'une certaine complexité de réalisation, en raison de la présence de rotors de déchiquetage.

La présente invention a pour but de remédier à ces inconvénients en proposant un dispositif de compactage et de cisaillage d'objets volumineux de forte élasticité, notamment de pneumatiques, de conception simple, qui permet de découper des pneumatiques parfaitement compactés, autorisant ainsi une découpe optimum, même des joncs métalliques qu'il renferment.

Le dispositif de compactage et de cisaillage objet de la présente invention comprend un tunnel d'amenage et de compactage de section rectangulaire, qui va en se rétrécissant vers une de ses extrémités et il se caractérise essentiellement en ce qu'il comporte un moyen de coupe de type connu, par exemple à guillotine, positionné à l'extrémité du tunnel, et en ce que les quatre parois dudit tunnel sont constituées de rouleaux parallèles et juxtaposés disposés transversalement, la longueur des rouleaux d'au moins deux parois en regard diminuant progressivement en se rapprochant de l'extrémité dudit tunnel, et au moins les rouleaux des parois verticales et de la paroi horizontale inférieure étant mus en rotation par un dispositif moteur approprié.

Conformément à l'invention, les rouleaux, moteurs ou en libre rotation, sont soit crantés soit lisses, selon le type d'objets à compacter.

Le tunnel d'amenage et de compactage du dispositif selon l'invention permet d'obtenir une compression progressive des objets, quelle que soit leur taille, et une avancée régulière de ceux-ci jusqu'au cisaillage.

Les rouleaux moteurs du dispositif selon l'invention peuvent avantageusement tourner dans les deux sens, permettant, dans le cas d'un blocage dans le tunnel, de ramener vers l'arrière les objets compactés.

Un convoyeur, vibrant ou non, placé à la sortie du poste de cisaillage, peut compléter le dispositif selon l'invention.

Les avantages et les caractéristiques de la présente invention ressortiront plus clairement de la description qui suit et qui se rapporte au dessin annexé, lequel en représente un mode de réalisation non limitatif.

Dans le dessin annexé :

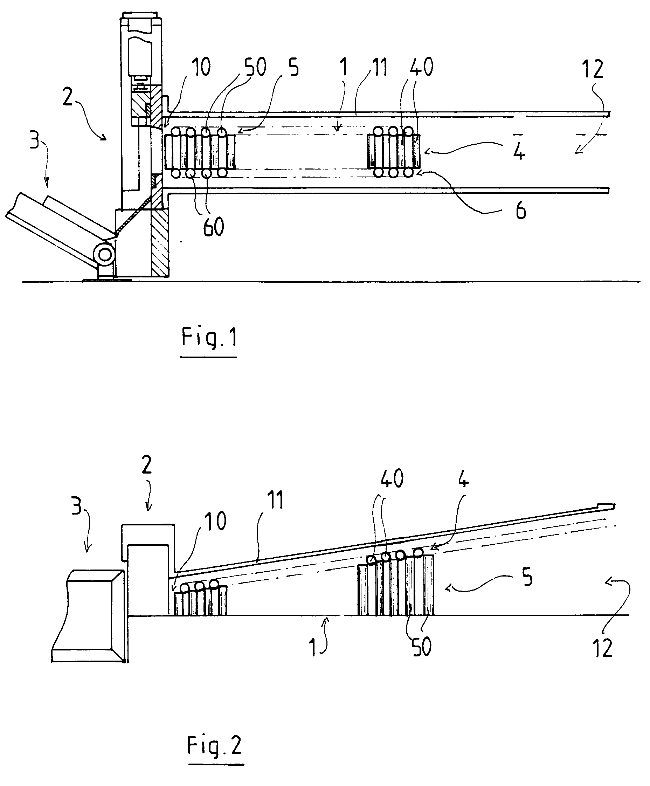

- la figure 1 représente une vue partielle en coupe longitudinale, selon un plan vertical, d'un dispositif de compactage et de cisaillage selon l'invention.
- la figure 2 représente une vue partielle en plan et en coupe du même dispositif.

Si on se réfère à ces figures on peut voir que le dispositif de compactage et de cisaillage selon l'invention comporte un tunnel 1 d'amenage et de compactage de section rectangulaire, qui va en rétrécissant d'une extrémité à l'autre.

L'extrémité 10 la plus étroite du tunnel 1 débouche sur une cisaille 2 à guillotine, de type connu en soi, qui ne sera donc pas décrite plus en détail.

Un convoyeur 3, vibrant ou non, est installé en aval de la cisaille 2, permettant l'évacuation des déchets.

Les deux parois verticales du tunnel 1 sont constituées chacune d'une rangée 4 de rouleaux 40, lisses ou crantés, juxtaposés parallèlement, entraînés en rotation par un dispositif moteur non représenté.

Les parois horizontales du tunnel 1 sont constituées, pour la paroi supérieure d'une rangée 5 de rouleaux 50, lisses ou crantés, parallèles et juxtaposés, montés en libre rotation, et pour la paroi inférieure d'une rangée 6 de rouleaux 60, également lisses ou crantés, parallèles et juxtaposés, entraînés en rotation par un dispositif moteur non représenté.

Les rouleaux 40 des parois verticales sont décalés par rapport aux rouleaux 50 et 60 des parois horizontales, les axes, non représentés, des rouleaux 40 et les axes, également non représentés, des rouleaux 50 et 60 étant situés dans des plans verticaux parallèles différents, permettant ainsi une meilleure "étanchéité" du tunnel 1, et facilitant leur solidarisation à un bâti 11.

Les rouleaux verticaux 40 sont de même longueur tandis que les rouleaux horizontaux 50 et 60 ont une longueur qui va en diminuant vers l'extrémité 10 du tunnel 1, dont la forme va se rétrécissant vers ladite extrémité 10.

Ce mode de réalisation, non limitatif, est préféré pour sa simplicité de conception, la rotation des rouleaux 40 et 60 pouvant être réalisée en extrémité de ceux-ci, au moyen d'un dispositif d'entraînement par chaînes ou engrenages.

Un tel dispositif est utilisé de la façon suivante : les objets à compacter et à cisailler sont introduits dans le tunnel 1 par son extrémité la plus large 12, et sont entraînés par la rotation des rouleaux verticaux 40 et horizontaux inférieurs 60. Du fait du rétrécissement du tunnel 1 ces objets sont compactés et la masse compacte qui en résulte est poussée hors du tunnel 1 par son extrémité 10 où elle est découpée par la cisaille 2.

Il va de soi que la présente invention ne saurait être limitée à la description qui précède d'un de ses modes de réalisation, susceptible de subir un certain nombre de modifications sans pour autant sortir du cadre de l'invention.

Le rétrécissement du tunnel peut notamment être réalisé non seulement en largeur mais également en hauteur.

## Revendications

1. Dispositif de compactage et de cisaillage d'objets volumineux de forte élasticité, notamment de pneumatiques, du type comprenant un tunnel (1) d'amenage et de compactage de section rectangulaire, allant en se rétrécissant vers une de ses extrémités (10), caractérisé en ce qu'il comporte un moyen de coupe (2) positionné à l'extrémité (10) du tunnel (1) et en ce que les quatre parois dudit tunnel (1) sont constituées de rouleaux parallèles et juxtaposés (40, 50, 60), disposés transversalement, au moins les rouleaux (40) des parois verticales et (60) de la paroi horizontale inférieure étant mus en rotation par un dispositif moteur.

2. Dispositif selon la revendication 1 caractérisé en ce que le moyen de coupe (2) est à guillotine.

3. Dispositif selon la revendication 1 ou la revendication 2 caractérisé en ce que les rouleaux horizontaux (50) de la paroi supérieure sont montés en libre rotation.

4. Dispositif selon l'une des revendications 1 à 3 caractérisé en ce que les rouleaux (40, 50, 60) sont lisses.

5. Dispositif selon l'une des revendications 1 à 3 caractérisé en ce que les rouleaux (40, 50, 60) sont crantés.

6. Dispositif selon l'une quelconque des revendications précédentes caractérisé en ce que les axes des rouleaux verticaux (40) et les axes des rouleaux horizontaux (50, 60) sont situés dans des plans verticaux différents.

7. Dispositif selon l'une quelconque des revendications précédentes caractérisé en ce que les rouleaux moteurs (40, 60) peuvent tourner dans les deux sens.

## Claims

1. Compacting and shearing device for voluminous highly elastic objects, especially tyres, of the type including a feeding and compacting tunnel (1) with a rectangular section and retracting at one of its ends (10), characterised in that it comprises a cutting element (2) positioned at the end (10) of the tunnel (1) and in that the four walls of said tunnel (1) are formed of parallel and juxtaposed rollers (40, 50, 60) disposed transversally, at least from the rollers (40) of the vertical walls and that (60) of the lower horizontal wall being moved in rotation by a motor device.

2. Device according to claim 1, characterised in that the cutting element (2) is a guillotine type element.

3. Device according to claim 1 or 2, characterised in that the horizontal rollers (50) of the upper wall are rotation mounted to freely rotate..

4. Device according to one of claims 1 to 3, characterised in that the rollers (40, 50, 60) are smooth.

5. Device according to one of claims 1 to 3, characterised in that the rollers (40, 50, 60) are corrugated.

6. Device according to one of the preceding claims, characterised in that the axes of the vertical rollers (40) and those of the horizontal rollers (50, 60) are situated inside different vertical planes.

7. Device according to one of the preceding claims, characterised in that the motor rollers (40, 60) can rotate in both directions.

## Patentansprüche

1. Press- und Schneidvorrichtung für voluminöse, stark elastische Gegenstände, insbesondere Reifen, des Typs bestehend aus einem Zuführungs- und Preßtunnel (1) mit rechteckigem Querschnitt, der sich zu einem seiner Enden (10) hin verjüngt, dadurch gekennzeichnet, daß er ein am Ende (10) des Tunnels (1) positioniertes Schneidmittel (2) umfaßt und dadurch, daß die vier Wände des besagten Tunnels (1) aus parallelen und übereinandergelagerten (40, 50, 60) Rollen gebildet werden, die quer angebracht sind, wobei mindestens die Rollen (40) der vertikalen Wände und (60) der unteren horizontalen Wand von einer Antriebsvorrichtung elektronisch angetrieben rotieren.

2. Vorrichtung gemäß Anspruch 1, dadurch gekennzeichnet, daß das Schneidmittel (2) mit einem Querschneider versehen ist.

3. Vorrichtung gemäß Anspruch 1 oder Anspruch 2, dadurch gekennzeichnet, daß die horizontalen Rollen (50) der oberen Wand in freier Drehung angebracht sind.

4. Vorrichtung gemäß einem der Ansprüche 1 bis 3, dadurch gekennzeichnet, daß die Rollen (40, 50, 60) glatt sind.

5. Vorrichtung gemäß einem der Ansprüche 1 bis 3, dadurch gekennzeichnet, daß die Rollen (40, 50, 60) gerastet sind.

6. Vorrichtung gemäß einem der vorigen Ansprüche, dadurch gekennzeichnet, daß die Achsen der vertikalen Rollen (40) und die Achsen der horizontalen Rollen (50, 60) sich in verschiedenen vertikalen Ebenen befinden.

7. Vorrichtung gemäß einem der vorigen Ansprüche, dadurch gekennzeichnet, daß die Antriebsrollen (40, 60) sich in beiden Richtungen drehen können.
